(19) Europäisches Patentamt
European Patent Office
Office européen des brevets

(11) **EP 1 754 128 B1**

(12) **EUROPÄISCHE PATENTSCHRIFT**

(45) Veröffentlichungstag und Bekanntmachung des Hinweises auf die Patenterteilung:
**17.10.2007 Patentblatt 2007/42**

(51) Int Cl.:
***G06F 1/14*** *(2006.01)*   *H04J 3/06* *(2006.01)*
*H04L 12/56* *(2006.01)*

(21) Anmeldenummer: 05743061.3

(22) Anmeldetag: **18.04.2005**

(86) Internationale Anmeldenummer:
**PCT/EP2005/051693**

(87) Internationale Veröffentlichungsnummer:
**WO 2005/121926 (22.12.2005 Gazette 2005/51)**

(54) **DEZENTRALE ZEITINTERVALLSYNCHRONISATION IN VERTEILTEN NETZWERKEN**

DECENTRALIZED TIME INTERVAL SYNCHRONIZATION IN DISTRIBUTED NETWORKS

SYNCHRONISATION D'INTERVALLE DE TEMPS DECENTRALISEE DANS DES RESEAUX DISTRIBUES

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **09.06.2004 DE 102004028071**

(43) Veröffentlichungstag der Anmeldung:
**21.02.2007 Patentblatt 2007/08**

(73) Patentinhaber: **NOKIA SIEMENS NETWORKS GMBH & CO. KG**
**81541 München (DE)**

(72) Erfinder: **SOLLACHER, Rudolf**
**84174 Eching (DE)**

(56) Entgegenhaltungen:
**WO-A-00/48367**

• **CALLAWAY E: "USING BLUETOOTH FOR REAL TIME CLOCK SETTING AND REGULATION" MOTOROLA TECHNICAL DEVELOPMENTS, MOTOROLA INC. SCHAUMBURG, ILLINOIS, US, Bd. 42, Dezember 2000 (2000-12), Seiten 125-127, XP000970445 ISSN: 0887-5286**

EP 1 754 128 B1

## Beschreibung

Die vorliegende Erfindung betrifft ein Verfahren zur Zeitsynchronisierung eines dezentral organisierten Netzwerks, das eine Mehrzahl von Knoten umfasst, die zur zeitsynchronen Übertragung von Informationen innerhalb bestimmbarer Zeitschlitze eines Sende-/Empfangskanals geeignet sind.

In dezentral organisierten Netzwerken ist zur Koordinierung von Aktionen und zur korrekten zeitlichen Einordnung von Ereignissen eine Abbildung der lokalen Zeit eines Netzknotens auf die jeweiligen Zeiten seiner Nachbarknoten erforderlich. Die lokalen Zeiten sind dabei im Allgemeinen durch lokale Zähler definiert. In Netzwerken mit statischer Topologie kann eine Zeitsynchronisierung beispielsweise durch eine Synchronisation der jeweiligen Zähler erfolgen (siehe hierzu z.B. D.L. Mills: "Internet Time Synchronization: The Network Time Protocol", in Z. Yang and T. A. Marsland (Hrsg.): "Global States and Time in Distributed Systems", IEEE Computer Society Press, Los Alamitos, CA, 1994, S. 91-102).

In Netzwerken mit dynamischer Topologie, wie z.B. mobilen ad-hoc Funknetzwerken, kann eine derartige Anpassung der Zeitgeber einzelner Netzknoten zu relativ häufigen lokalen Zeitsprüngen führen und damit z.B. die zeitlich kausale Zuordnung von Ereignissen im Netzwerk beeinträchtigen. Eine besser geeignete Abbildung der lokalen Zeiten ist in J. Elson und K. Römer: "Wireless Sensor Networks: A New Regime for Time Synchronization", ACM SIGCOMM Computer Communications Review (CCR), Vol. 33, Number 1, 2003, S. 149-154 gezeigt. Hier werden die lokalen Zähler nicht verstellt, sondern es werden beim Austausch von Informationen zwischen den Netzknoten lokale Zeitstempel mit versendet. Jeder Netzknoten ist dann in der Lage, die unterschiedlichen lokalen Zeiten auf seine jeweilige lokale Zeit umzurechnen. Jedoch ist bei diesem Verfahren für einen koordinierten Zugriff auf Ressourcen, wie z.B. die Luftschnittstelle in mobilen Funknetzwerken, eine zeitliche Synchronisation der Aktivitäten der einzelnen Knoten erforderlich. In selbstorganisierenden Netzen kommt als eine weitere Herausforderung hinzu, die Synchronisation auch ohne vorhandene Netzstrukturen zu erreichen und der Dynamik der Netzwerktopologie anzupassen.

In selbstorganisierenden Netzen erfolgt eine Zeitsynchronisation der Netzknoten im Wesentlichen durch eine Kommunikation mit den Nachbarknoten. Siehe hierzu beispielsweise S. Hoff, D. Hübner, F. Reichert and A. Scunio: "Leistungsbewertung von Verfahren der Mobil-Kommunikation: Dezentrale Paketsynchronisation und Kanalzugriff", in A. Lehmann and F. Lehmann (Hrsg): "Messung, Modellierung und Bewertung von Rechensystemen", Proceedings der 6. GI/ITG-Fachtagung, Neubiberg, 18. - 20. September 1991, S. 152-166 (Springer-Verlag, ISBN: 3-540-54550-6) und W. Zhu: "TDMA frame synchronization of mobile stations using a radio clock signal for short range communications", in IEEE 44th Vehicular Technology Conf., 8. - 10. Juni, Stockholm, Schweden, Vol. 3, 1994, S. 1878 - 1882. WO-00/48367 (NOKIA) offenbart die Merkmale des Oberbegriffs des Anspruches 1.

Bei dem als "Last Received Synchronization" (LRS) bekannten Verfahren synchronisiert sich ein Netzknoten mit demjenigen Netzknoten, von dem er zuletzt ein Synchronisationsdatenpaket erhalten hat. Bei dem als "Transmit Majority Synchronization" (TMS) bekannten Verfahren werden zusätzlich mit der Zeitgeber-Information Gewichtsfaktoren ausgetauscht, die angeben, wie gut der sendende Knoten mit seinen Nachbarknoten synchronisiert ist. Diese Gewichte werden innerhalb fester Zeitintervalle bestimmt. Nach jedem Zeitintervall synchronisiert sich ein Knoten mit demjenigen Knoten, der das höchste Gewicht hat. Bei dem als "Averaging Synchronization Differences" (ASD) bekannten Verfahren, welches in der oben genannten Druckschrift von W. Zhu beschrieben ist, ermittelt jeder Netzknoten die Synchronisationsdifferenzen für seine Nachbarn innerhalb eines festen Zeitintervalls und synchronisiert sich dann zum Mittelwert der Timer-Werte. Hier wird allerdings eine erste grobe Synchronisation durch ein DCF77-Zeitsignal erzeugt, so dass durch das ASD-Verfahren nur noch die Restfehler minimiert werden.

Verschiedene im Stand der Technik bekannte Verfahren zur Zeitsynchronisierung von dezentral organisierten Netzwerken werden nun näher erläutert.

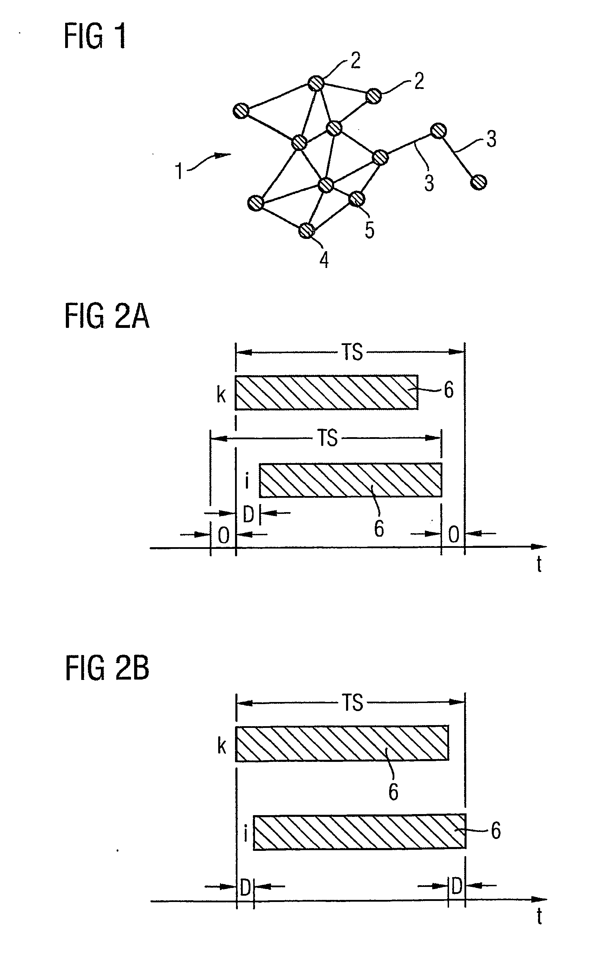

Fig. 1 zeigt beispielhaft ein dezentral organisiertes Netzwerk 1, bei welchem eine Mehrzahl von Netzknoten 2 mittels Kommunikationsleitungen 3 miteinander verbunden sind. Es wird hierbei angenommen, dass jeder Netzknoten mit einem Zähler versehen ist, der Zeitschritte von Null bis zu einem Maximalwert in wiederholter Weise abzählt. Das gesamte Intervall von Zählwerten zwischen Null und dem Maximalwert entspricht hierbei der Dauer eines Zeitschlitzes innerhalb eines TDMA-Rahmens, wobei die Dauer der einzelnen Zeitschritte die Auflösung bestimmt, mit welcher ein solcher Zeitschlitz aufgelöst werden kann. Ferner ist angenommen, dass alle Netzknoten die gleiche Zeitschlitzdauer (Maximalwert des Zählers) und die gleiche Zeitschrittdauer anwenden, abgesehen von gewöhnlich auftretenden Drifteffekten und geringfügigen Abweichungen bei den Oszillatorfrequenzen.

In Fig. 2A und Fig. 2B sind die Zeitschlitze (Zeitintervalle) TS eines Sendernetzknotens 4 und eines Empfängernetzknotens 5 gezeigt. In Fig. 2A ist das Zeitintervall TS des Sendernetzknotens 4 gegenüber dem Zeitintervall TS des Empfängernetzknotens 5 um einen "Offset"-Wert O verschoben. Ein von dem Sendernetzknoten 4 ausgesandtes Datenpaket 6 gelangt ferner aufgrund der endlichen Lichtgeschwindigkeit erst verzögert beim Empfängernetzknoten 5 an. In den Fig. 2A und 2B ist diese Verzögerung D ebenfalls eingezeichnet. Offset O und Verzögerung D verringern gemeinsam die zur Übertragung des Datenpakets 6 verfügbare Zeit des Zeitintervalls TS, was zu einem Bandbreitenverlust führt. In Fig. 2B ist ein Zustand gezeigt, in welchem der Bandbreitenverlust lediglich aus der auf der endlichen Laufzeit der Signale basierenden Verzögerung resultiert, d.h. der Offset ist Null. Mit anderen Worten, Fig. 2B zeigt den Fall, in welchem der Sendernetzknoten 4 und der Empfängernetzknoten 5 in optimaler Weise zueinander zeitsynchronisiert sind. Gleichwohl ergibt sich aus der Propagationsverzögerung D eine untere Grenze für den Bandbreitenverlust.

Eine zeitliche Synchronisierung der Netzknoten in dem dezentral organisierten Netzwerk basiert auf dem Austausch von Datenpaketen 6, welche den Zustand des Zählers des Sendernetzknotens am Beginn der Übertragung angeben. Im Folgenden wird als $\tau_{t,i}$ die lokale Zeit des Zählers des Netzknotens i zu einem (diskreten) Zeitintervall t bezeichnet. Die Absolutwerte dieser lokalen Werte sind für die Zeitsynchronisierung von Netzknoten unerheblich, da lediglich die Zeitunterschiede eine praktische Bedeutung haben. Wie sich aus Fig. 2A ergibt, misst ein zu einem Zeitintervall t ein Synchronisationssignal von einem Sendeknoten k empfangender Empfängerknoten i einen relativen Zeitunterschied $\Delta_{t,ik}$, der sich aus dem Unterschied der lokalen Zeit $\tau_{t,k}$ des Senders k im Zeitintervall t und der lokalen Zeit $\tau_{t,i}$ des Empfängers i im Zeitintervall t, sowie der Propagationsverzögerung $t_{delay}$ (und gegebenenfalls Verzögerungen durch Drifteffekte oder Oszillatorschwankungen) ergibt. In dieser Propagationsverzögerung können auch Bearbeitungszeiten (z. B. für Kodierung/Dekodierung) im Sender bzw. Empfänger enthalten sein. Mathematisch kann dies durch die folgenden Gleichungen ausgedrückt werden:

$$\Delta_{t,ik}^{(0)} = \tau_{t,k} - \tau_{t,i} + t_{delay}$$

$$\Delta_{t,ik} = \left\{ \begin{pmatrix} \Delta_{t,ik}^{(0)}, & wenn \left| \Delta_{t,ik}^{(0)} \right| \le \dfrac{\tau_{max}}{2} \\ \tau_{max} - \Delta_{t,ik}^{(0)}, & wenn \left| \Delta_{t,ik}^{(0)} \right| > \dfrac{\tau_{max}}{2} \end{pmatrix} \right\}$$

wobei in obigen Gleichungen der relative Zeitunterschied $\Delta_{t,ik}$ der beiden Zähler der Netzknoten i, k so definiert ist, dass für Unterschiede, die größer sind als $\tau_{max/2}$ der komplementäre Wert in Bezug auf das gesamte Zeitintervall definiert ist.

Bei dem LRS-Verfahren, welches in der oben genannten Publikation von S. Hoff et al. beschrieben ist, synchronisiert sich ein Netzknoten i mit der zuletzt empfangenen Synchronisationszeit eines Knotens k, wenn der Offset größer als ein Toleranzwert tol ist. Dies kann durch die folgenden Gleichungen dargestellt werden:

$$\tau_{t+1,i} = \tau_{t,i} + \eta_t \Delta_{t,ik}$$

$$\eta_t = \theta \left( \left| \Delta_{t,ik} \right| - tol \right)$$

Hierbei ist $\theta(x)$ eine Stufenfunktion, welche für ein negatives Argument Null und für ein positives Argument Eins ist. Offensichtlich ist in diesem Verfahren der Zeitsynchronisierung die Anpassungsrate $\eta_t$ entweder Null oder Eins.

Bei einer als Medianfilter-Verfahren bekannten Zeitsynchronisierung von Netzknoten dezentral organisierter Netzwerke sammelt ein Netzknoten alle empfangenen Synchronisationszeiten innerhalb eines Zeitfensters. Nach diesem Intervall passt er sich dem Medianwert an. Dieser Algorithmus minimalisiert in einer statischen Nachbarschaft den Bandbreitenverlust. Zur Erläuterung dieses Algorithmus sei ein Netzknoten betrachtet, welcher einen Zählerstand (lokale Zeit) $\tau_0$ aufweist, der von k Nachbarn mit Zählerständen $\tau_i$, i = 1, ..., k, umgeben ist. Der mittlere Verlust L ist hierbei gegeben durch:

$$\begin{aligned} L &= \sum_{i=1}^{k} \left| \tau_i - \tau_0 \right| \\ &= \sum_{i, \tau_i > \tau_0} (\tau_i - \tau_0) + \sum_{i, \tau_i < \tau_0} (\tau_0 - \tau_i) \\ &= \sum_{i, \tau_i > \tau_0} \tau_i - \sum_{i, \tau_i < \tau_0} \tau_i + \left( \sum_{i, \tau_i < \tau_0} - \sum_{i, \tau_i > \tau_0} \right) \tau_0 \end{aligned}$$

Solange die Variationen von $\tau_0$ keinen der Werte $\tau_i$ überschreiten, hängt die Steigung von L als eine Funktion von $\tau_0$ lediglich von der Differenz zwischen der Anzahl von Nachbarn mit einem Zählerwerten von $< \tau_0$ und der Anzahl von Nachbarn mit einem Zählerwerten von $> \tau_0$ ab. Diese Steigung ändert ihr Vorzeichen, wenn diese Differenz Null wird. Dies impliziert, dass L minimalisiert wird, wenn $\tau_0 = \text{Median}(\{\tau_i\})$ gewählt wird.

Ein weiteres im Stand der Technik bekanntes Verfahren zur Zeitsynchronisierung von Netzknoten dezentral organisierter Netzwerke ist die so genannte "exponentielle Glättung". Hier passt sich ein Netzknoten einer empfangenen Synchronisationszeit mit einer festen Anpassungsrate $\eta$ an, und zwar nur dann, wenn der Zähler-Offset eine bestimmte Toleranz überschreitet. Dies kann durch die folgende Gleichung ausgedrückt werden:

$$\tau_{t+k,i} = \tau_{t,i} + \eta\theta\left(\left|\Delta_{t,ik}\right| - \text{tol}\right)\Delta_{t,ik}$$

Schließlich ist ein als Kalman-Filter bekanntes Verfahren zur Zeitsynchronisierung vom Netzknoten einsetzbar. Bei diesem Verfahren werden ein statischer Zähler-Offset, sowie Messungen entsprechend den empfangenen Synchronisationssignalen angenommen. Deshalb passt sich ein Netzknoten einer empfangenen Synchronisationszeit mit einer von der Frequenz der empfangenen Synchronisationssignale abhängigen Rate an. Dies kann durch die folgenden Gleichungen ausgedrückt werden.

$$s_{t+1,i} = s_{t,i} + q,$$

bei jedem Zeitschritt

$$K_{t+1,i} = \frac{s_{t+1,i}}{s_{t+1,i} + 1}$$

$$\tau_{t+1,i} = \tau_{t,i} + K_{t+1,i}\Delta_{t,ik}$$

$$s_{t+1,i} = (1 - K_{t+1,i})s_{t+1,i}$$

Dies bedeutet, dass je höher die Frequenz ist, desto niedriger ist die Adaptationsrate.

Für diese verschiedenen Verfahren wurden rechnerische Simulationen durchgeführt. Für diese Simulationsrechnungen wurde die Zeit t als diskret angesehen und deshalb durch ganze Zahlen dargestellt. Von jedem Netzknoten wurde angenommen, dass er eine durch einen Zähler definierte lokale Zeit hat. Aus Gründen der Zweckmäßigkeit ist angenommen, dass der Offset der lokalen Zeiten zwischen Netzknoten Werte im Intervall zwischen Null und Eins hat. Von Zeit zu Zeit teilt ein Netzknoten k seine aktuelle Zeit $\tau_{t,k}$ seinen momentanen Nachbarn mit. Dies erfolgt mit einer Wahrscheinlichkeit $t_b$ pro diskretem Zeitschritt. Ein Netzknoten empfängt jedoch nur dann ein Synchronisationssignal von einem Nachbarn, wenn alle anderen Nachbarn und dieser Netzknoten selbst nicht gleichzeitig übertragen. Es wird angenommen, dass die Ausbreitung des Synchronisierungssignals Zeit erfordert. Der Mittelwert dieser Ausbreitungsverzögerungszeit ist hierbei als $t_{delay}$ bezeichnet. Für die Simulationen ist ein Bruchteil von 0,02 des Zählerintervalls als Ausbreitungsverzögerungszeit angenommen. Abweichungen von dieser Kommunikationszeit und etwaige Drifteffekte aufgrund von Hardware-Variabilitäten werden durch eine Zufallsverzögerung $\varepsilon$ mit dem Mittelwert Null und der Standardabweichung $\sigma_c$ berücksichtigt. Für die letztere wurde ein Wert von 0,005 des Zählerintervalls angenommen. Die Netzknoten passen den Zustand ihres eigenen Zählers $\tau_{t,i}$ auf der Basis des gemessenen Zählerunterschieds $\Delta_{t,ik} = \tau_{t,k} + t_{delay} + \varepsilon - \tau_{t,i}$ entsprechend einer gewählten Synchronisierungsmethode an.

Zunächst wurde ein Netzwerk von n = 20 Netzknoten mit einer zeitveränderlichen Topologie betrachtet. Anfangs wurden 10% aller möglichen Verknüpfungen des Netzwerks als aktiv ausgewählt. Während der Simulation wurden Verknüpfungen unter allen möglichen Verknüpfungen zwischen den Netzknoten mit einer Wahrscheinlichkeit von 0,01 pro Zeitschritt entfernt, während Verknüpfungen mit einer Wahrscheinlichkeit von 0,001 pro Zeitschritt hinzugefügt wurden. Dieses Verfahren ist ohne Wirkung, wenn rein zufällig eine nicht bestehende Verknüpfung zum Entfernen oder eine bestehende Verknüpfung zum Hinzufügen ausgewählt wird. Somit beträgt die Wahrscheinlichkeit pro Schritt zum Entfernen einer bestehenden Verknüpfung 0,01 x 0,1 = 0,001, wobei 0,1 die Wahrscheinlichkeit ist, eine aktive Verknüpfung auszuwählen. Gleichermaßen beträgt die Wahrscheinlichkeit pro Zeitschritt zum Hinzufügen einer nicht bestehenden Verknüpfung 0,001 x 0,9 = 0,0009, wobei 0,9 die Wahrscheinlichkeit ist, eine nicht aktive Verknüpfung zu erstellen. Als eine Folge hiervon, bleibt die Gesamtzahl von Verknüpfungen im Wesentlichen konstant und das Netzwerk besteht zu jedem Zeitpunkt im Mittel aus ca. 5 $\pm$2 Netzwerk-Clustern.

Ein Netzknoten überträgt ein Synchronisationssignal mit einer Wahrscheinlichkeit t pro Zeitintervall. Ein Netzknoten kann ein Synchronisierungssignal jedoch nur dann empfangen, wenn er nicht selbst überträgt und wenn nur ein einzelner seiner Nachbarn überträgt.

Für jeden der oben genannten Algorithmen wurden M = 30 Simulationen über 1.000 Zeitschritte für jeden Satz von Parameterwerten durchgeführt. Für jede Simulation wurde der tatsächliche Verlust L bestimmt: immer dann, wenn ein Netzknoten i ein Synchronisationszeitsignal von einem Netzknoten k empfängt, bestimmt er den Verlust $|\Delta_{t,ik}|$ für diese Verknüpfung und behält diesen Wert, bis das nächste Signal (im Allgemeinen von einem anderen Netzknoten) empfangen wird. Ein zeitabhängiger mittlerer Verlust ist dann als ein Mittelwert über die tatsächlichen Verlustwerte aller Netzknoten berechnet worden. Schließlich ist der Mittelwert und die Standardabweichung des mittleren Verlusts L über M = 30 unabhängige Simulationen in den beigefügten Kurven dargestellt worden.

Die Synchronisationszeit ST ist aus den Reihen der mittleren Verlust-Zeit bestimmt worden. Hierfür sind alle Zeiten gekennzeichnet worden, wo der mittlere Verlust L von oberhalb auf unterhalb von 0,1 gefallen ist. Die Synchronisationszeit ST wurde als Mittelwert der gekennzeichneten Zeiten berechnet. Offensichtlich sollten die meisten der Gewichte in einem Zeitintervall konzentriert sein, wo der Verlust L auf unterhalb von 0,1 fällt. Diese Art der Simulation wird als "zufälliges dynamisches Netzwerk" bezeichnet.

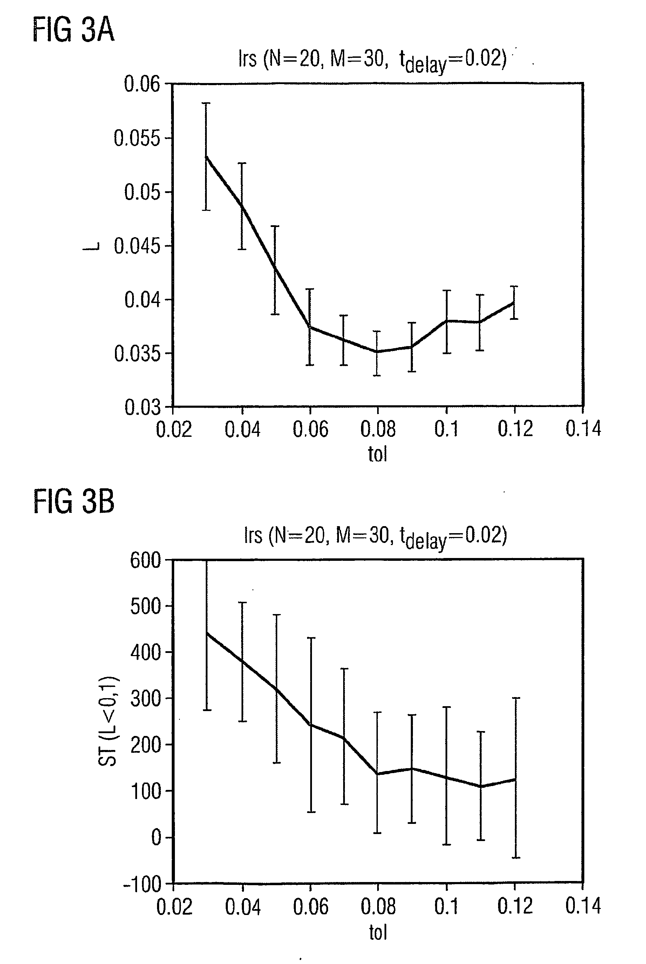

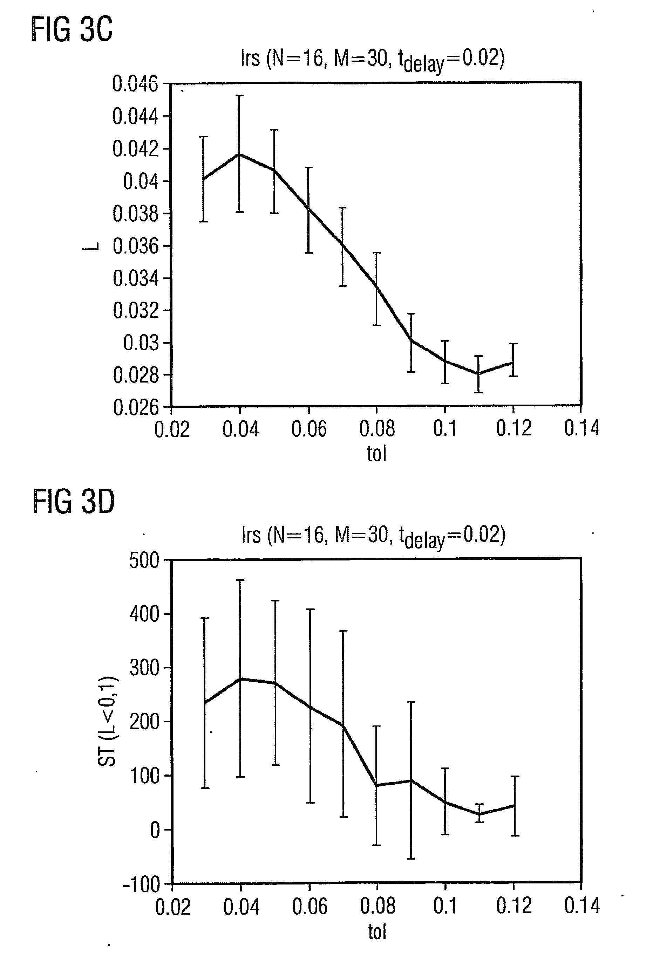

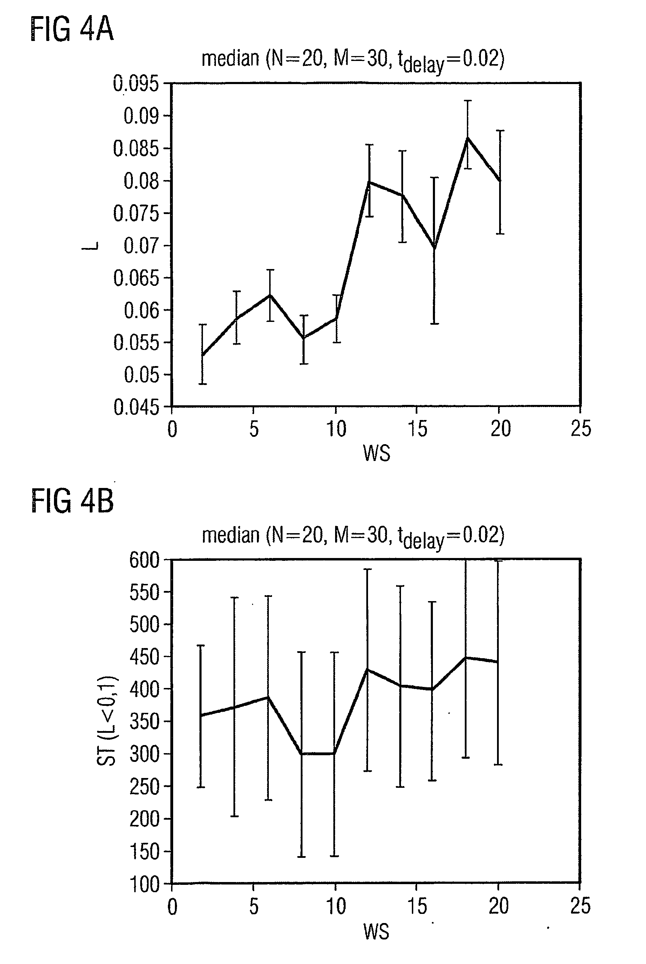

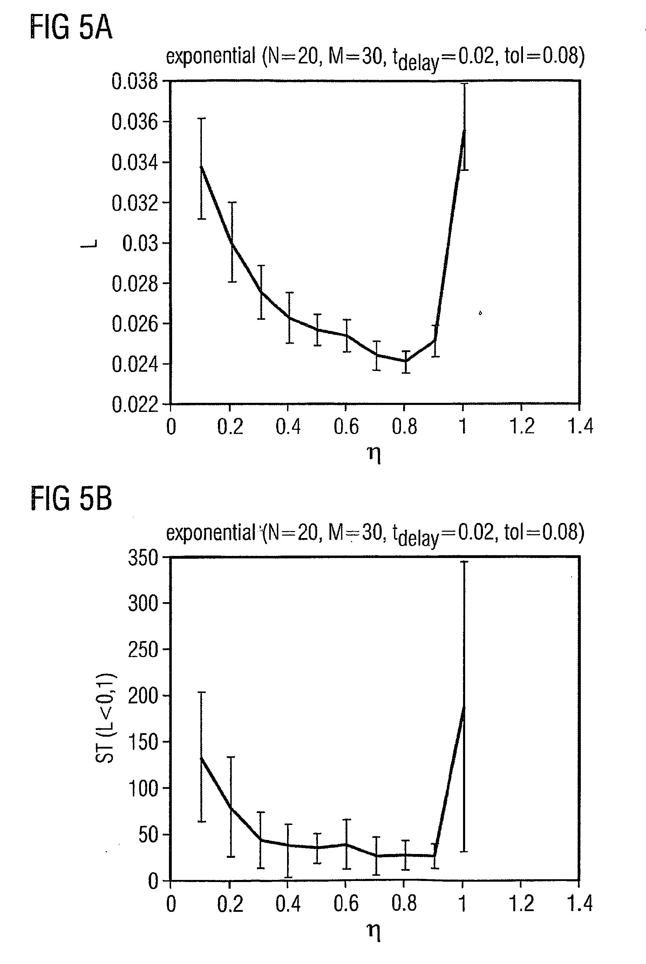

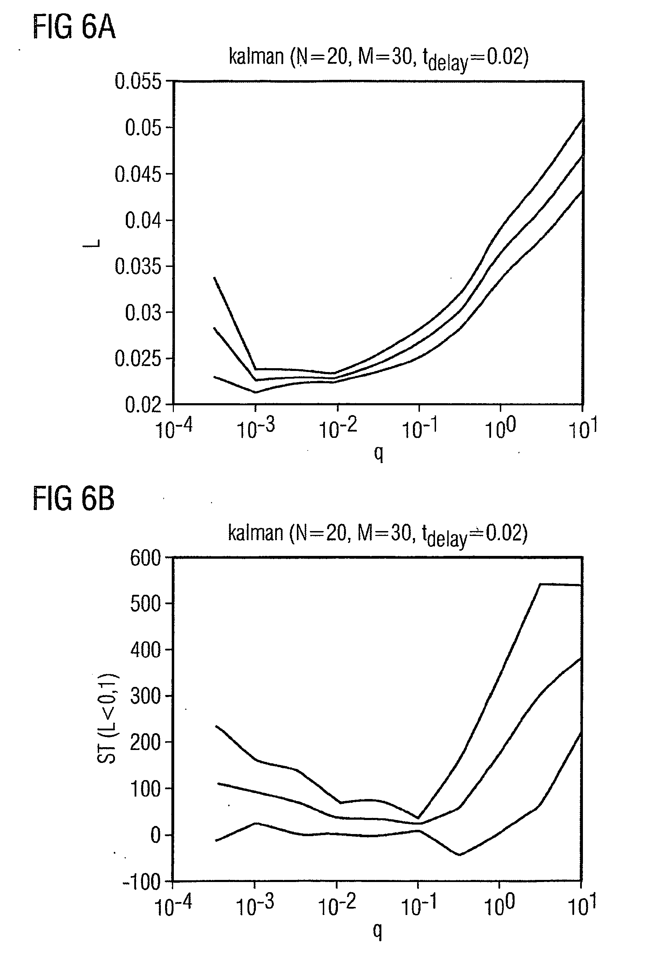

Die Ergebnisse dieser rechnerischen Simulationen für die oben genannten im Stand der Technik bekannten Verfahren sind in den Figuren 3A, 3B, 4A, 4B, 5A, 5B, 6A und 6B gezeigt. Die Fig. 3A und 3B zeigen den mittleren Verlust L bzw. die Synchronisationszeit ST als eine Funktion der Toleranzschwelle tol für das zufällige dynamische Netzwerk in dem LRS-Verfahren. Die Fehlerbalken geben den Mittelwert $\pm$ 1 Standardabweichung an. Die Fig. 4A und 4B zeigen den mittleren Verlust L bzw. die Synchronisationszeit ST als eine Funktion der Probenfenstergröße für das zufällige dynamische Netzwerk in dem Medianfilter-Verfahren. Die Fehlerbalken geben hier den Mittelwert $\pm$ 1 Standardabweichung an. Die Fig. 5A und 5B zeigen den mittleren Verlust L bzw. die Synchronisationszeit ST als eine Funktion der Adaptationsrate η für das zufällige dynamische Netzwerk bei dem Verfahren der exponentiellen Glättung. Die Fehlerbalken geben hier den Mittelwert $\pm$ 1 Standardabweichung an. Die Fig. 6A und 6B zeigen den mittleren Verlust L bzw. die Synchronisationszeit ST als eine Funktion der Unbestimmtheit-Wachstumsrate q für das zufällige dynamische Netzwerk bei dem Kalmanfilter-Verfahren. Die drei Linien interpolieren hier die Simulationsergebnisse, wobei die mittlere Linie den Mittelwert angibt und die oberen und unteren Linien $\pm$ 1 Standardabweichung angeben.

Für die oben genannten im Stand der Technik bekannten Verfahren wurden ferner rechnerische Simulationen durchgeführt, bei welcher Unternetzwerke unter Verwendung einer Gittertopologie verschmolzen wurden. Insbesondere wurde der Fall von zwei individuell synchronisierten Unternetzwerken, die entlang einer Grenzlinie miteinander verschmelzen, untersucht. Zu diesem Zweck wurden Netzknoten auf einem quadratischen Gitter mit L x L Sätzen angeordnet, wobei für jeden Netzknoten vier Verknüpfungen zu nächsten Nachbarn, mit Ausnahme an der Grenzlinie, vorlagen. Die linke Hälfte dieses Gitters weist einen gemeinsamen Zähler-Offset $\Delta\tau_1$ = 0,5 auf, während die rechte Hälfte dieses Gitters einen Zähler-Offset $\Delta\tau_2$ = 0 aufweist. Wiederum empfängt ein Netzknoten in dieser Simulation nur dann ein Synchronisationssignal, wenn er nicht selbst überträgt und wenn nur einer seiner Nachbarn überträgt. Ein Netzknoten überträgt mit einer Wahrscheinlichkeit $t_b$ pro Zeitintervall.

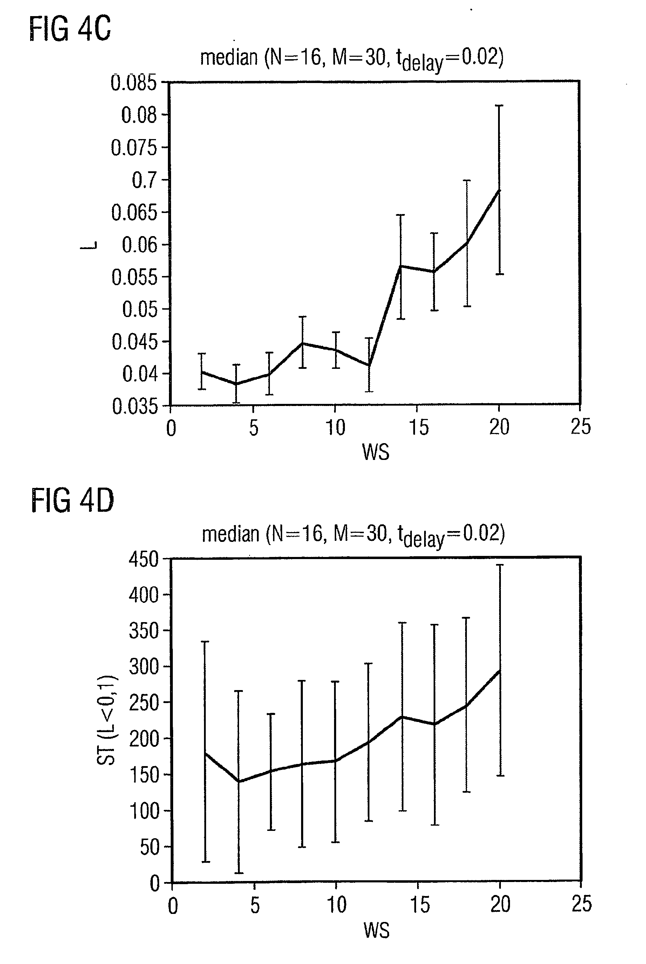

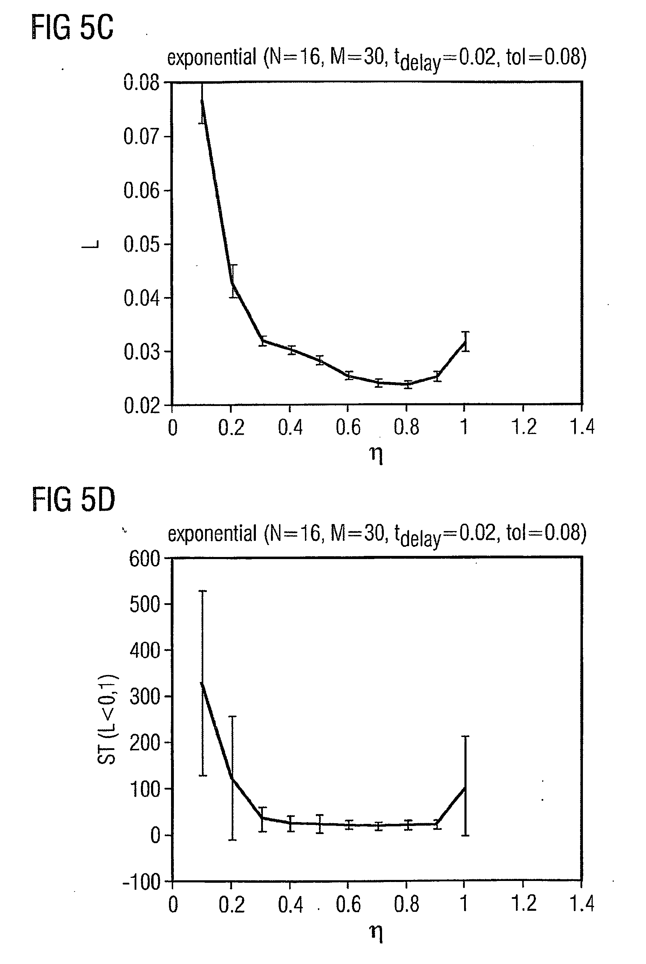

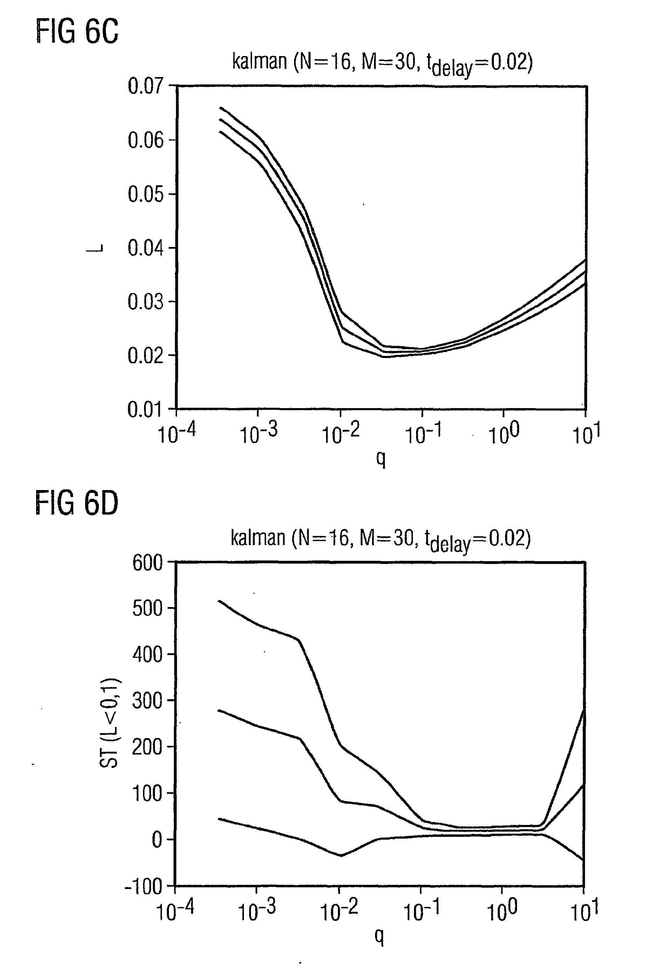

Die Ergebisse dieser rechnerischen Simulationen sind in den Figuren 3C, 3D, 4C, 4D, 5C, 5D, 6C und 6D gezeigt. Die Fig. 3C und 3D zeigen den mittleren Verlust L bzw. die Synchronisationszeit ST als eine Funktion der Toleranzschwelle tol für das Gitternetzwerk bei dem LRS-Verfahren. Die Fehlerbalken geben den Mittelwert $\pm$ 1 Standardabweichung an. Die Fig. 4C und 4D zeigen den mittleren Verlust L bzw. die Synchronisationszeit ST als eine Funktion der Probenfenstergröße WS für das Gitternetzwerk bei dem Medianfilter-Verfahren. Die Fehlerbalken geben hierbei den Mittelwert $\pm$ 1 Standardabweichung an. Die Fig. 5C und 5D zeigen den mittleren Verlust L bzw. die Synchronisationszeit ST als eine Funktion der Adaptationsrate η für das Gitternetzwerk bei dem Verfahren der exponentiellen Glättung. Die Fehlerbalken geben hierbei den Mittelwert $\pm$ 1 Standardabweichung an. Die Fig. 6C und 6D geben den mittleren Verlust L bzw. die Synchronisationszeit ST als eine Funktion der Unbestimmtheits-Wachstumsrate q für das Gitternetzwerk bei dem Kalmanfilter-Verfahren an. Die drei Linien interpolieren die Interpolationsergebnisse, wobei die mittlere Linie den Mittelwert bezeichnet, während die oberen und unteren Linien $\pm$ 1 Standardabweichung angeben.

Vergleicht man die im Stand der Technik bekannten Verfahren miteinander, so ist bezüglich des Verhaltens bei einer maximalen Adaptationsrate festzustellen, dass das LRS-, das TMS-Verfahren oder die exponentielle Glättung mit einer Adaptationsrate von η = 1 den Zählerzustand des übertragenden Netzknotens zuzüglich einer Drift- und Propagationsverzögerung sofort kopieren. Wenn diese zusätzlichen Effekte vernachlässigt werden, bedeutet eine Synchronisierung mit diesen Methoden einen Wettbewerb unter den verschiedenen Zuständen der Zähler, bei welchem lediglich einer überlebt und schließlich alle Netzknoten besetzt. Es sei beispielsweise die Gittertopologie mit den verschmelzenden Netzwerken betrachtet. Hier haben wir zwei verschiedene Synchronisationspunkte - einen für die linke Hälfte und einen davon verschiedenen für die rechte Hälfte. Eine Synchronisierung bei einer vollen Adaptationsrate bedeutet, dass an der Grenze zwischen den beiden Unternetzwerken einige Netzknoten zu dem anderen Synchronisationspunkt umschalten. Aufgrund des zufälligen Senderausfallprozesses wachsen oder schrumpfen Inseln eines Synchronisationspunktes. Am Ende haben alle Netzknoten den gleichen Synchronisationspunkt. Jedoch kann dieser Prozess willkürlich lange dauern. Effekte wie eine Drift- und Propagationsverzögerung führen zu einer Glättung der Synchronisationspunktverteilung und führen somit zu einem Abfall jeder Population, was eine schnellere Synchronisierung unterstützt. Wie aus den obigen Figuren ersichtlich ist, beobachtet man bei einer vollen Adaptationsrate (LRS-Verfahren, Medianfilter-Verfahren, exponentielles Glätten bei $\eta = 1$, Kalmanfilter-Verfahren bei Mq) lange Synchronisationszeiten mit einer großen Standardabweichung. Vergleicht man die Simulationen hinsichtlich ihrer Leistungsfähigkeit, d.h. in Bezug auf den mittleren Verlust L und die Synchronisationszeit ST, sind optimale Werte von $\eta$ oder q erkennbar, welche jedoch im Voraus bestimmt werden müssen, was sich in der Praxis als schwierig erweist und diese Verfahren für die praktische Anwendung nur bedingt tauglich macht. Es ist also insgesamt festzustellen, dass die im Stand der Technik bekannten Verfahren eine große Parameterabhängigkeit zeigen, welche eine Optimierung im Hinblick auf den Verlust L schwierig machen bzw. eine aufwändige Kalibrierung erfordern. Zudem haben die im Stand der Technik bekannten Verfahren eine relativ lange Synchronisationszeit ST.

Demgegenüber besteht die Aufgabe der vorliegenden Erfindung darin, ein Verfahren zur Zeitsynchronisation von Netzknoten eines dezentral organisierten Netzwerks anzugeben, mit welchem die Nachteile der im Stand der Technik bekannten Verfahren vermieden werden können. Diese Aufgabe wird nach dem Vorschlag der Erfindung durch ein Verfahren gemäß Anspruch 1 gelöst. Vorteilhafte Ausgestaltungen der Erfindung sind durch die Merkmale der Unteransprüche gegeben.

Erfindungsgemäß ist ein Verfahren zur Zeitsynchronisierung eines dezentral organisierten Netzwerks mit einer Mehrzahl von Netzknoten gezeigt, die durch Kommunikationsverbindungen zum Austausch von Informationen verbunden sind und zur Übertragung von Informationspaketen geeignet sind. Jeder Netzknoten weist hierbei einen lokalen Zähler zur Definition einer in periodische Zeitintervalle unterteilten lokalen Zeit $\tau$ auf, die zusammen mit einem zwischen Netzknoten übertragenen Informationspaket übertragen wird. Ein wesentliches Kennzeichen des erfindungsgemäßen Verfahrens ist, dass die lokale Zeit $\tau_{t+1,i}$ in einem Zeitintervall t+1 eines Netzknotens i, welcher ein Informationspaket erhalten hat, das die lokale Zeit $\tau_{t,k}$ eines Netzknotens k in einem Zeitintervall t umfasst, um einen Betrag $\Delta\tau_{t+1,i}$ phasenverschoben wird. Der Betrag $\Delta\tau_{t+1,i}$ ergibt sich hierbei aus der Differenz $\Delta_{t,ik}$ der lokalen Zeit $\tau_{t,i}$ in einem Zeitinterall t des Netzknotens i und der lokalen Zeit $\tau_{t,k}$ in einem Zeitinterall t des Netzknotens k gemäß den folgenden Gleichungen

$$s_{t+1,i} = (1-\eta)\,s_{t,i} + \eta\theta(|\Delta_{t,ik}| - tol)$$

$$\Delta\tau_{t+1,i} = s_{t+1,i}\,\Delta_{t,ik}$$

wobei $s_{t+1,i}$ der Wert eines Synchronisationsparameters s in einem Zeitintervall t+1 für den Netzknoten i ist, während $s_{t,i}$ der Wert des Synchronisationsparameters s in einem Zeitintervall t für den Netzknoten i ist; $\theta$ eine Stufenfunktion ist, welche für ein positives Argument den Wert Eins annimmt, während sie für negatives Argument den Wert Null annimmt; $\eta$ ein im Bereich $0 \leq \eta < 1$ wählbarer Parameter ist; tol ein wählbarer Toleranz-Schwellwert ist.

Die Wahl der speziellen Größe des Toleranz-Schwellwerts tol hängt stark von der gewünschten Anwendung ab. Der Toleranz-Schwellwert tol kann hierbei im Bereich von einigen Minuten, einigen Millisekunden oder einigen Nanosekunden liegen, je nachdem, welche Genauigkeit in dem erfindungsgemäßen Verfahren gewünscht ist. Jedenfalls sollte der Toleranz-Schwellwert tol so gewählt werden, dass er größer ist als die Länge eines Zeitintervalls t und auch größer ist als die Propagationsverzögerung $t_{delay}$.

Der Synchronisationsparameter s stellt einen internen Speicher für den Anteil der nicht-synchronisierten Nachbar-Netzknoten dar. Bei dem erfindungsgemäßen Verfahren, welches als LSE-("Learning from Synchronization Errors")-Verfahren bezeichnet wird, adaptiert sich ein Netzknoten mit einer gewissen Rate an den Zähler des gerade sendenden Netzknotens. Diese Adaptationsrate wird gelernt und ist um so größer, je größer die Synchronisationsfehler des Knotens sind. In vorteilhafter Weise benötigt das erfindungsgemäße LSE-Verfahren keine festen Zeitintervalle und ist damit universell einsetzbar. Zudem ist die Wahl der beiden freien Parameter $\eta$, tol unkritisch. Das Verfahren konvergiert zuverlässig und der Restfehler (Verlust L) ist minimal, so dass in vorteilhafter Weise auf ein Time-Advance-Verfahren, durch welches die Laufzeitverzögerung $t_{delay}$ korrigiert werden kann, verzichtet werden kann. Bei einer vorteilhaften Ausgestaltung der Erfindung ist der Parameter $\eta$ aus dem Bereich $0,1 \leq \eta \leq 0,8$ gewählt.

Das erfindungsgemäße Verfahren lässt sich in besonders vorteilhafter Weise einsetzen, wenn die Netzknoten mobile Stationen sind, so dass das Netzwerk ein mobiles Funknetzwerk, insbesondere ad-hoc-Funknetzwerk bildet. Gleichermaßen ist es jedoch auch möglich, dass die Netzknoten des Netzwerks zum Austausch von Informationen durch elektrische Verbindungsleitungen miteinander verbunden sind.

In dem erfindungsgemäßen Verfahren ist es in vorteilhafter Weise sehr einfach möglich, dass weitere Netzknoten dem Netzwerk beitreten oder aus diesem austreten. Ebenso ist es möglich, dass mehrere Netzwerke miteinander verschmelzen, bzw. dass sich Netzwerke von einem vorhandenen Netzwerk abspalten. Bei dem Netzwerk der vorliegenden Erfindung kann es sich beispielsweise um ein Sensornetzwerk handeln.

Die Erfindung wird nun näher erläutert, wobei Bezug auf die beigefügten Zeichnungen genommen wird.

Fig. 1      zeigt eine schematische Darstellung eines Netzwerks mit durch Kommunikationsverbindungen verbundenen Netzknoten;

Fig. 2A      zeigt in schematischer Weise die Phasenverschiebung eines Sender-Zeitschlitzes gegenüber einem Empfänger-Zeitschlitz, welche sich aus dem Offset der Zähler von Sender und Empfänger und der Signallaufzeitverzögerung ergibt;

Fig. 2B      zeigt in schematischer Weise die Phasenverschiebung eines Sender-Zeitschlitzes gegenüber einem Empfänger-Zeitschlitz, welche sich bei einem Offset von Null lediglich aus der Signallaufzeitverzögerung ergibt;

Fig. 3A - 3D      zeigen die Ergebnisse von rechnerischen Simulationen des LRS-Verfahrens;

Fig. 4A - 4D      zeigen die Ergebnisse von rechnerischen Simulationen des Medianfilter-Verfahrens;

Fig. 5A - 5D      zeigen die Ergebnisse von rechnerischen Simulationen des exponentiellen Glättungs-Verfahrens;

Fig. 6A - 6D      zeigen die Ergebnisse von rechnerischen Simulationen des Kalmanfilter-Verfahrens;

Fig. 7A - 7D      zeigen die Ergebnisse von rechnerischen Simulationen des erfindungsgemäßen LSE-Verfahrens;

Fig. 8      zeigt das Ergebnis eines Zeitsynchronisations-Experiments mit dem erfindungsgemäßen LSE-Verfahren.

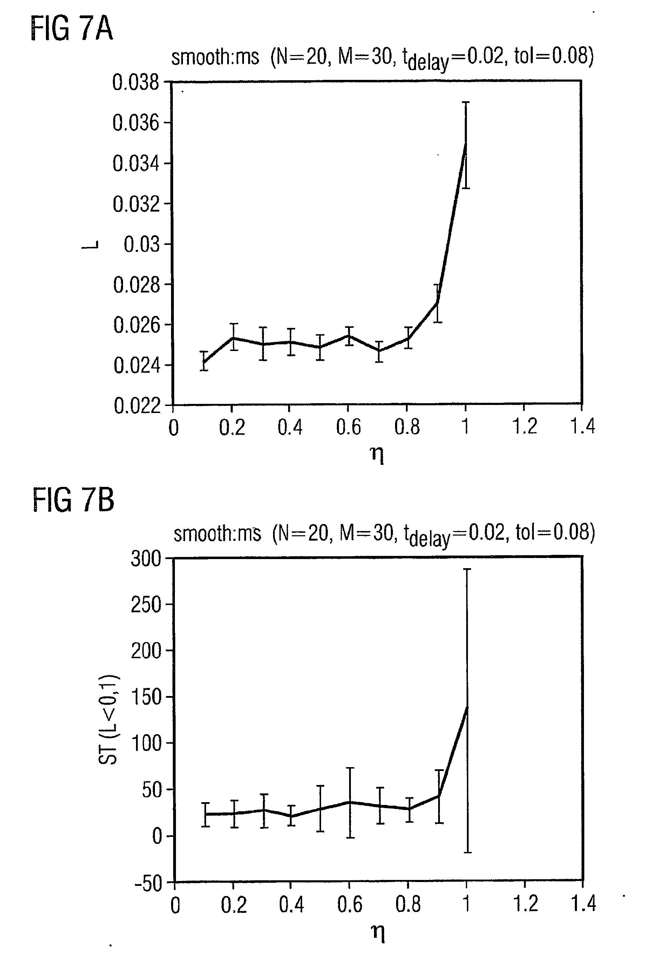

Die Fig. 1 - 6D wurden bereits eingangs erläutert, so dass hier darauf nicht mehr näher eingegangen werden muss. Die Fig. 7A - 7D zeigen die Ergebnisse rechnerischer Simulationen des erfindungsgemäßen LSE-Verfahrens, welche in der gleichen Weise, wie bei den im Stand der Technik bekannten Verfahren, deren Ergebnisse in den Fig. 3A - 6D dargestellt sind, durchgeführt wurde. Auf die dort gemachten Ausführungen zur Durchführung der rechnerischen Simulatioen wird hier Bezug genommen.

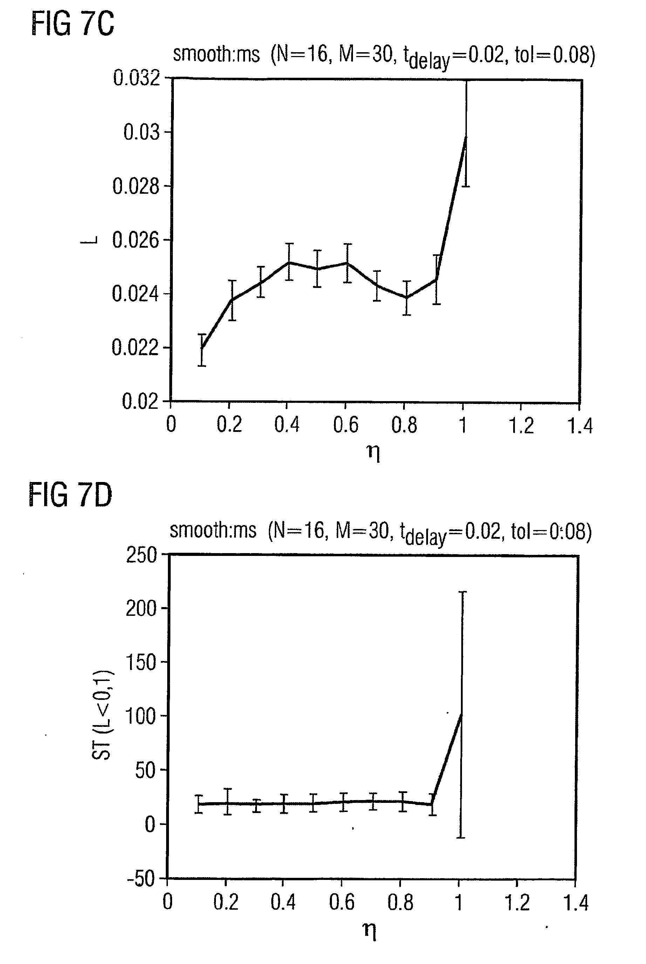

Die Fig. 7A und 7B entsprechen hierbei dem zufälligen dynamischen Netzwerk aus N = 20 Netzknoten mit einer zeitveränderlichen Topologie. Die Fig. 7C und 7D entsprechen den verschmelzenden Unternetzwerken unter Verwendung einer Gittertopologie.

Fig. 7A zeigt eine grafische Darstellung des Verlusts L in Abhängigkeit des Parameters $\eta$. Wie Fig. 7A zu entnehmen ist, kann mit dem erfindungsgemäßen LSE-Verfahren ein bemerkenswert geringer mittlerer Verlust L von ca. 0,025 über fast den ganzen Bereich der wählbaren Werte des Parameters $\eta$ erzielt werden. Die Fehlerbalken geben hierbei den Mittelwert $\pm$ 1 Standardabweichung an. So ist Fig. 7A insbesondere zu entnehmen, dass innerhalb des Bereichs $0,1 \leq \eta \leq 0,8$ ein mittlerer Verlust L im Bereich von ca. 0,024 bis 0,026 auftritt. Ein solch geringer mittlerer Verlust L wird von den im Stand der Technik bekannten Verfahren von dem exponentiellen Glättungs-Verfahren, jedoch nur für $\eta = 0,8$, und dem Kalmanfilter-Verfahren, jedoch nur für $q \approx 0,1$, erreicht, wobei diese Parameter im Voraus bestimmt werden müssen. Im Gegensatz hierzu kann in dem erfindungsgemäßen LSE-Verfahren zur Erzielung eines bemerkenswert geringen mittleren Verlustes L im Bereich zwischen ca. 0,024 und 0,026 der Parameter $\eta$ zwischen 0,1 und 0,8 beliebig gewählt werden. Dieser Verlust ist wenig größer als die mittlere Verzögerung von 0,02, jedoch wesentlich kleiner als 0,04, d.h. das Zweifache dieses Werts. Dieser Wert 0,04 wäre der kleinste Wert, der durch ein zentralisiertes Schema mit einem Synchronisierungs-Master, ohne ein weiteres zusätzliches Zeit-Verzögerungsverfahren erreicht werden könnte. Somit ist der erfindungsgemäße dezentralisierte Synchronisationsalgorithmus in der Lage, die Laufzeitverzögerung wenigstens teilweise zu kompensieren. Dies impliziert, dass die Zähler der verschiedenen Netzknoten fast synchron ticken (ein Verlust tritt lediglich aufgrund der für die Ausbreitung der Signale erforderlichen Zeit und gegebenenfalls aufgrund einer Oszillatordrift und Frequenzdispersion auf).

Fig. 7B offenbart fast über den gesamten Bereich des wählbaren Parameters $\eta$ eine im Vergleich zu den im Stand der Technik bekannten Verfahren sehr geringe Synchronisationszeit ST, wobei diese als die Zeitdauer definiert ist, bis der Verlust L auf einen Wert von unterhalb von 0,1 fällt.

Fig. 7C ist zu entnehmen, dass auch bei der Simulation der verschmelzenden Unternetzwerke ein im Vergleich zu den im Stand der Technik bekannten Zeitsynchronisationsverfahren sehr geringer Verlust L innerhalb eines Bereichs von 0,22 bis 0,026 in einem Bereich des Parameters η zwischen 0,1 und 0,9 erzielt werden kann.

Wie Fig. 7D zu entnehmen ist, ist die Synchronisationszeit ST während dieses Parameterbereichs konstant niedrig.

Zusammenfassend ist festzustellen, dass die rechnerischen Simulationen eindrucksvoll belegen, dass das LSE-Verfahren, verglichen mit den im Stand der Technik bekannten Verfahren, weitgehend parameterunabhängig einen sehr geringen Verlust L hat und innerhalb einer sehr kurzen Synchronisationszeit ST stabil konvergiert. Das LSE-Verfahren erweist sich somit als ein effizientes und robustes Schema zur Zeitsynchronisierung eines dezentral organisierten Netzwerks.

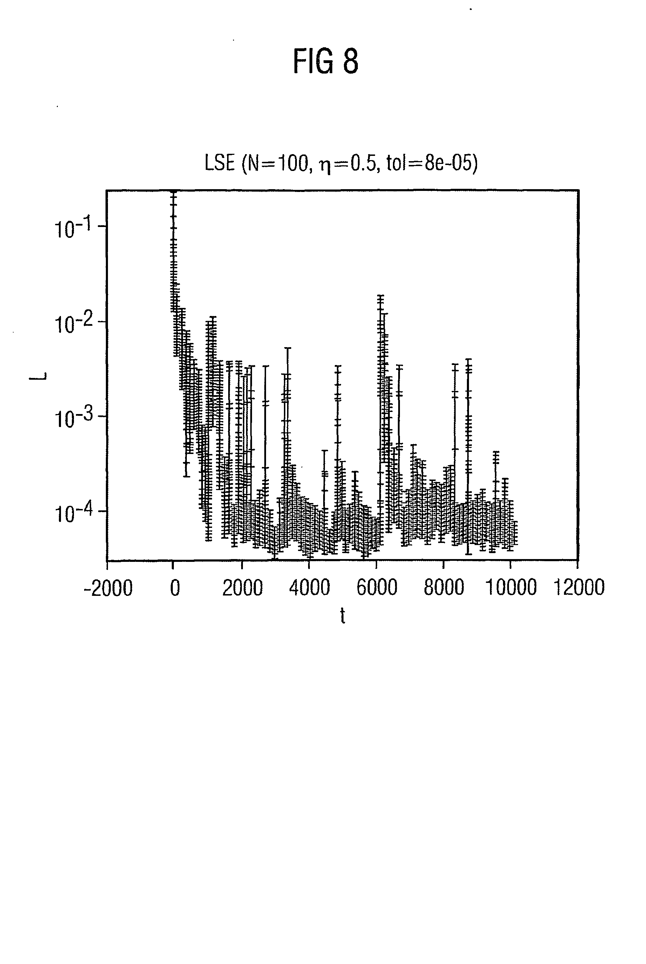

Fig. 8 zeigt das Ergebnis einer Simulation des LSE-Verfahrens in einer realistischeren Umgebung. Zu diesem Zweck wurde die Bewegung von 100 Fußgängern auf der Fläche des Münchner Marienplatzes sowie dessen Umgebung untersucht. Die Mobilitätsdaten wurden unter Verwendung eines realistischen Modells für die Fußgängerdynamik erzeugt (siehe E. Helbing: "Verkehrsdynamik - neue physikalische Modellierungskonzepte", Springer-Verlag, Berlin, Heidelberg, 1997, S. 20ff). Für die Funkwellenausbreitung wurde ein Übertragungsbereich von 25 m angenommen. Die Simulation erfolgte für 10.000 Zeitschritte, entsprechend 100 Sekunden Echtzeit.

Fig. 8 zeigt den mittleren Verlust L als eine Funktion der Zeit t, wobei ein Zeitschritt 0,01 Sekunden entspricht. Die Fehlerbalken geben den Mittelwert ± 1 Standardabweichung an. Fig. 8 ist in klarer Weise die rasche Konvergenz des Mittelwerts des Verlusts L auf Werte von ca. $10^{-12}$, gemessen in Teilen des Zeitgeberintervalls, zu entnehmen. Der asymptotische Wert entspricht $10^{-7}$ Sekunden, was nahe an der maximalen Signallaufzeitverzögerung von ca. 0,8 x $10^{-7}$ Sekunden ist. Die Konvergenz wird lediglich durch Spitzen gestört, wenn zuvor umgekoppelte Netzwerk-Cluster miteinander verschmelzen.

## Patentansprüche

1. Verfahren zur Zeitsynchronisierung eines dezentral organisierten Netzwerks, welches Netzwerk (1) eine Mehrzahl von durch Kommunikationsverbindungen (3) verbundene Netzknoten (2) umfasst, welche Netzknoten geeignet sind, Informationspakete (6) zu übertragen, wobei jeder Netzknoten einen lokalen Zähler zur Definition einer in periodische Zeitintervalle unterteilten lokalen Zeit τ aufweist, die zusammen mit einem zwischen Netzknoten übertragenen Informationspaket übertragen wird,
   wobei
   die lokale Zeit $\tau_{t+1,i}$ in einem Zeitintervall t+1 eines Netzknotens i, welcher ein Informationspaket erhalten hat, das die lokale Zeit $\tau_{t,k}$ eines Netzknotens k in einem Zeitintervall t umfasst, um einen Betrag $\Delta\tau_{t+1,i}$ phasenverschoben wird, **dadurch gekennzeichnet, daß** sich $\Delta\tau_{t+1,i}$ aus der Differenz $\Delta_{t,ik}$ der lokalen Zeit $\tau_{t,i}$ in einem Zeitinterall t des Netzknotens i und der lokalen Zeit $\tau_{t,k}$ in einem Zeitinterall t des Netzknotens k ergibt aus

$$s_{t+1,i} = (1-\eta)\, s_{t,i} + \eta\theta\left(\left|\Delta_{t,ik}\right| - \mathrm{tol}\right)$$

$$\Delta\tau_{t+1,i} = s_{t+1,i}\, \Delta_{t,ik}$$

   wobei $s_{t+1,i}$ der Wert eines Synchronisationsparameters s in einem Zeitintervall t+1 für den Netzknoten i ist, während $s_{t,i}$ der Wert des Synchronisationsparameters s in einem Zeitintervall t für den Netzknoten i ist; θ eine Stufenfunktion ist, welche für ein positives Argument den Wert Eins annimmt, während sie für negatives Argument den Wert Null annimmt; η ein im Bereich $0 \leq \eta < 1$ wählbarer Parameter ist; tol ein wählbarer Toleranz-Schwellwert ist.

2. Verfahren nach Anspruch 1, bei welchem der Parameter η in einem Bereich $0,1 \leq \eta \leq 0,8$ liegt.

3. Verfahren nach Anspruch 1 oder 2, bei welchem das Netzwerk mobile Stationen umfasst und insbesondere ein mobiles ad-hoc-Netzwerk ist.

4. Verfahren nach Anspruch 1 oder 2, bei welchem das Netzwerk ein Sensornetzwerk ist.

## Claims

1. Method for time synchronisation of a decentrally organized network, with said network (1) comprising a plurality of network nodes (2) connected by communication links (3), with said network nodes being suitable for transmitting information packets (6), with each network featuring a local counter for definition of a local time $\tau$ subdivided into periodic time intervals, which is transmitted together with an information packet transmitted between network nodes, with

   the local time $\tau_{t+1,i}$ being phase offset by an amount $\Delta\tau_{t+1,i}$ in a time interval t+1 of a network node I, which has received an information packet, which includes the local time $\tau_{t,k}$ of a network node k in a time interval t,

   **characterised in that** $\Delta\tau_{t+1,i}$ is produced by the difference $\Delta_{t,ik}$ of the local time $\tau_{t,i}$ in a time interval t of the network node i and the local time $\tau_{t,k}$ in a time interval t of the network node k from

$$s_{t+1,i} = (1-\eta)s_{t,i} + \eta\theta(|\Delta_{t,ik}| - \text{tol})$$

$$\Delta\tau_{t+1,i} = s_{t+1,i}\Delta_{t,ik}$$

   with $s_{t+1,i}$ being the value of a synchronisation parameters s in a time interval t+1 for the network node i, while $s_{t,i}$ is the value of the synchronisation parameter s in a time interval t for the network node i, $\theta$ is a step function which assumes the value one for positive argument, whereas for a negative argument it assumes the value zero; $\eta$ is a parameter selectable in the range $0 \leq \eta < 1$; tol is a selectable tolerance threshold.

2. Method in accordance with claim 1, in which the parameter $\eta$ lies in a range $0.1 \leq \eta \leq 0.8$ lies.

3. Method as claimed in claim 1 or 2, in which the network comprises mobile stations and is especially a mobile ad-hoc network.

4. Method as claimed in claim 1 or 2, in which the network is a sensor network.


## Revendications

1. Procédé pour la synchronisation temporelle d'un réseau à organisation décentralisée, lequel réseau (1) comprend une pluralité de noeuds de réseau (2) reliés par des liaisons de communication (3), lesquels noeuds de réseau sont adaptés pour transmettre des paquets d'informations (6), chaque noeud de réseau possédant un compteur local pour la définition d'un temps local $\tau$ divisé en intervalles de temps périodiques qui est transmis en même temps qu'un paquet d'informations transmis entre des noeuds de réseau,

   le temps local $\tau_{t+1,i}$ présentant un déphasage égal à $\Delta\tau_{t+1,i}$ dans un intervalle de temps t+1 d'un noeud de réseau i qui a reçu un paquet d'informations comprenant le temps local $\tau_{t,k}$ d'un noeud de réseau k dans un intervalle de temps t, **caractérisé en ce que** $\Delta\tau_{t+1,i}$ résulte de la différence $\Delta_{t,ik}$ entre le temps local $\tau_{t,i}$ dans un intervalle de temps t du noeud de réseau i et le temps local $\tau_{t,k}$ dans un intervalle de temps t du noeud de réseau k

$$S_{t+1,i} = (1-\eta)S_{t,i} + \eta\theta(|\Delta_{t,ik}| - \text{tol})$$

$$\Delta\tau_{t+1,i} = S_{t+1,i}\Delta_{t,ik},$$

   $s_{t+1,i}$ étant la valeur d'un paramètre de synchronisation s dans un intervalle de temps t+1 pour le noeud de réseau i, tandis que $s_{t,i}$ est la valeur du paramètre de synchronisation s dans un intervalle de temps t pour le noeud de réseau i ; $\theta$ est une fonction discontinue qui prend la valeur un pour un argument positif et prend la valeur zéro pour un argument négatif ; $\eta$ est un paramètre pouvant être sélectionné dans le domaine $0 \leq \eta < 1$ ; tol est une valeur seuil de tolérance sélectionnable.

**2.** Procédé selon la revendication 1, dans lequel le paramètre $\eta$ est compris dans un domaine $0,1 \leq \eta \leq 0,8$.

**3.** Procédé selon la revendication 1 ou 2, dans lequel le réseau comprend des stations mobiles et est, notamment, un réseau ad hoc mobile.

**4.** Procédé selon la revendication 1 ou 2, dans lequel le réseau est un réseau de capteurs.

# FIG 1

# FIG 2A

# FIG 2B

## FIG 3A

Irs (N=20, M=30, $t_{delay}$=0.02)

## FIG 3B

Irs (N=20, M=30, $t_{delay}$=0.02)

## FIG 3C

Irs (N=16, M=30, $t_{delay}$=0.02)

## FIG 3D

Irs (N=16, M=30, $t_{delay}$=0.02)

## FIG 4A

median (N=20, M=30, t$_{delay}$=0.02)

## FIG 4B

median (N=20, M=30, t$_{delay}$=0.02)

## FIG 4C

median (N=16, M=30, $t_{delay}$=0.02)

## FIG 4D

median (N=16, M=30, $t_{delay}$=0.02)

## FIG 5A

exponential (N=20, M=30, $t_{delay}$=0.02, tol=0.08)

## FIG 5B

exponential (N=20, M=30, $t_{delay}$=0.02, tol=0.08)

## FIG 5C

exponential (N=16, M=30, $t_{delay}$=0.02, tol=0.08)

## FIG 5D

exponential (N=16, M=30, $t_{delay}$=0.02, tol=0.08)

## FIG 6A

kalman (N=20, M=30, $t_{delay}$=0.02)

## FIG 6B

kalman (N=20, M=30, $t_{delay}$=0.02)

## FIG 6C

kalman (N=16, M=30, $t_{delay}$=0.02)

## FIG 6D

kalman (N=16, M=30, $t_{delay}$=0.02)

## FIG 7A

smooth:ms $(N=20, M=30, t_{delay}=0.02, tol=0.08)$

## FIG 7B

smooth:ms $(N=20, M=30, t_{delay}=0.02, tol=0.08)$

## FIG 7C

smooth:ms (N=16, M=30, $t_{delay}$=0.02, tol=0.08)

## FIG 7D

smooth:ms (N=16, M=30, $t_{delay}$=0.02, tol=0:08)

# FIG 8

LSE (N=100, $\eta$=0.5, tol=8e-05)

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0048367 A

**In der Beschreibung aufgeführte Nicht-Patentliteratur**

- **D.L. MILLS.** Internet Time Synchronization: The Network Time Protocol
- Global States and Time in Distributed Systems. IEEE Computer Society Press, 1994, 91-102
- **J. ELSON ; K. RÖMER.** Wireless Sensor Networks: A New Regime for Time Synchronization. *ACM SIGCOMM Computer Communications Review (CCR,* 2003, vol. 33 (1), 149-154
- Messung, Modellierung und Bewertung von Rechensystemen. Proceedings der 6. GI/ITG-Fachtagung. Springer-Verlag, 18. September 1991, 152-166
- **W. ZHU.** TDMA frame synchronization of mobile stations using a radio clock signal for short range communications. *IEEE 44th Vehicular Technology Conf., 8. - 10. Juni,* 1994, vol. 3, 1878-1882
- **E. HELBING.** *Verkehrsdynamik - neue physikalische Modellierungskonzepte,* 1997, 20ff